**Europäisches Patentamt**

(19) **European Patent Office**

**Office européen des brevets**

(11) Veröffentlichungsnummer: **0 062 106**

**B1**

(12) **EUROPÄISCHE PATENTSCHRIFT**

(45) Veröffentlichungstag der Patentschrift:
23.07.86

(21) Anmeldenummer: **81109068.7**

(22) Anmeldetag: **28.10.81**

(51) Int. Cl.⁴: **C 08 F 220/18,** C 08 F 212/08, C 08 F 2/20, C 09 D 5/02, **C 09 J 3/14**

(54) Verfahren zur Herstellung von Copolymerisaten erhöhter Wasserfestigkeit und ihre Verwendung.

(30) Priorität: **24.03.81 DE 3111602**

(43) Veröffentlichungstag der Anmeldung:
**13.10.82 Patentblatt 82/41**

(45) Bekanntmachung des Hinweises auf die Patenterteilung:
**23.07.86 Patentblatt 86/30**

(84) Benannte Vertragsstaaten:
**CH DE FR GB IT LI**

(56) Entgegenhaltungen:
**DE-A-2 049 291**
**GB-A-1 155 275**
**US-A-2 227 163**
**US-A-3 198 775**

**CHEMICAL ABSTRACTS, Band 73, Nr. 12, 21. September 1970, Seite 10, Nr. 56589y, Columbus, Ohio, USA**

*Die Akte enthält technische Angaben, die nach dem Eingang der Anmeldung eingereicht wurden und die nicht in dieser Patentschrift enthalten sind.*

(73) Patentinhaber: **WACKER- CHEMIE GMBH, Prinzregentenstrasse 22, D-8000 München 22 (DE)**

(72) Erfinder: **Eck, Herbert, Dr. Dipl.- Chem., Burg 11, D-8263 Burghausen (DE)**
Erfinder: **Brabetz, Hartmut, Dr. Dipl.- Chem., Ludwig- Thoma- Strasse 29, D-8263 Burghausen (DE)**
Erfinder: **Adler, Klaus, Dr. Dipl.- Chem., lindenweg 13, D-8263 Burghausen (DE)**
Erfinder: **Hannebaum. Manfred, Immanuel- Kant- Strasse 49a, D-8263 Burghausen (DE)**
Erfinder: **Lechner, Wilhelm, Gartenweg 9, D8263 Burghausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Herstellunq stabiler wäßriqer Dispersionen auf der Basis von feinteiligen (Co-)Polymeren der Styrole und/ oder von Acryl- und/oder Methacrylsäureestern, die aufgrund des speziellen Herstellunqsverfahrens erhöhte Wasserfestiqkeit besitzen.

In der DE-PS 727 959 (die der US-PS 22 27 163 entspricht) ist bereits ein Verfahren vorgeschlagen worden momomere Verbindungen in Gegenwart hochmolekularen polyvinylalkohols oder seiner wasserlöslichen Derivate mit Hilfe von Wasserstoffperoxid bei erhöhter Temperatur zu polymerisieren. Eine Nacharbeitung dieses Verfahrens mit den Monomeren der vorliegenden Erfindung ergab jedoch völlig unbrauchbare Dispersionen voller grobkörnigen Koagulats. Insbesondere ließen sich keine Dispersionen mit Festgehalten über 35 Gew.%, insbesondere über 40 Gew.% herstellen, ohne daß sie schlagartig rheopex wurden oder koagulierten.

Aus der GB-PS 11 55 275 wiederum ist ein Verfahren zur Herstellung von Copolymerisaten bekannt, bei dem Latices zunächst in Gegenwart von Emulgator hergestellt und bei Umsätzen von 20 bis 80 % mit Schutzkolloid versetzt werden. Hierbei dient der Polyvinylalkohol nur als Zusatzstabilisator, eine Herstellung stabiler Dispersionen bei früherer Zugabe des Schutzkolloids ist gemäß diesem Verfahren nicht möglich, da der Ansatz dann koaguliert (Vergleichsversuch B).

Gegenstand der Erfindung ist ein Verfahren zur Herstellung von in Gegenwart von 4-20 Gew.-% Polyvinylalkohol, bezogen auf Monomere, hergestellten wäßrigen Dispersionen auf Basis von Polymeren, die zumindestens 60 Gew.-% aus (Meth-)Acrylsäureester- und/oder Styroleinheiten bestehen mit einem Festgehalt von 30-70 Gew.-%, das dadurch gekennzeichnet ist, daß die Polymerisation bei Temperaturen von über 65° in Gegenwart von organischen Katalysatoren, die neben ihrer Monomerlöslichkeit auch teilweise wasserlöslich sind, gegebenenfalls in Kombination mit wasserlöslichen Reduktionsmitteln, oder von Peroxoschwefelverbindungen in der Weise durchgeführt wird, daß, bezogen auf ds Gesamtgewicht, die Monomerkonzentration während der gesamten Reaktionsdauer unter 20 Gew.-° gehalten wird und dementsprechend die Hauptmenge der Monomeren in Form einer Voremulsion während der Reaktion dosiert wird.

Besonders vorteilhaft und auch überraschend ist, daß zur Herstellung solcher stabilen Dispersionen auf die Mitverwendung von Emulgatoren bei der Polymerisation völlig verzichtet werden kann. Dies bringt bei bestimmten Anwendungen vorteile. Genannt sei das Verhalten gegenüber Wasser oder Lösungsmitteln sowie beim Verdüsen.

Die Polymeren sind zu mindestens 60, vorzugsweise mindestens 80 Gew.% aus Monomereinheiten aufgebaut, die sich von Styrolen und/oder Estern der Acrylsäure und/oder Methacrylsäure mit geradkettigen, verzweigten oder cyclischen aliphatischen Alkoholen mit 1 bis ca. 20 C-Atomen, vorzugsweise Alkanolen, bzw. mit araliphatischen Alkoholen mit 7 bis ca. 20 C-Atomen, vorzugsweise arylsubstituierten Alkanolen ableiten.

Die Polymeren können darüberhinaus in einer Gesamtmenge bis zu 40, vorzugsweise bis zu 20 Gew.%, bezogen auf das Gesamtgewicht der Polymeren, weitere Monomereinheiten enthalten, zum Beispiel solche, die sich von Mono- und Diestern der Maleinsäure und der Fumarsäure mit den vorstehend genannten Alkoholen, von alpha,-beta-ungesättigten Carbonsäuren, deren Amiden und Nitrilen, von Maleinsäureanhydrid, von Ethylen, von Vinylestern vorzugsweise gesättigter Carbonsäuren mit 1 bis 20 C-Atomen, insbesondere solcher, die sich von gerad- oder verzweigtkettigen Alkanen ableiten, von Vinylhalogeniden sowie von anderen mit den (Meth-)-Acrylsäureestern und/oder Styrol copolymerisierbaren Monomern ableiten, auch von solchen mit reaktiven Gruppen, z.B. N-Methylolamiden, Vinyl- oder (Meth-)Acrylsilanen, Hydroxyl-, Amino-, Carboxyl-, Sulfonat-, Sulfat-, Keta-, und/oder Aldehydgruppen enthaltenden Verbindungen.

Beispielhaft sei für die Monomeren, aus deren Einheiten die (Co-)Polymerisate der erfindungsgemäßen Dispersionen aufgebaut sein können, genannt:

die Ester der Acryl- und der Methacrylsäure mit Methanol, Ethanol, n-Propanol, iso-Propanol, n-Butanol, sec.-Butanol, tert.-Butanol, 2-Ethylhexanol und Octadecanol, des weiteren Styrol, Methylstyrol, Fumarsäure- und Maleinsäuremono- und -diester mit den vorstehend genannten Alkoholen, Maleinsäureanhydrid, Acrylamid, Methacrylamid,. Acrylnitril, Methacrylnitril, Vinylacetat, -propionat, -stearat, -laurat, -versatat, N-Methylol-(meth-)acrylamid, N-Methylolallylcarbamat, Hydroxyethyl(meth-)acrylat, Hydroxypropyl(meth-)acylat, Hydroxybutyl(meth-)acrylat, Vinylsulfonat, Acetessigsäureallyl- und -vinylester, Diacetessigsäureallyl- und vinylester, sowie multifunktionelle Verbindungen wie Allyl(meth)acrylat, Allyl- und Vinylverbindungen von Glycidylalkohol, Glykolen, Polyolen und Polycarbonsäuren.

Bevorzugt werden die erfindungsgemäß hergestellten Dispersionen aus Monomergemischen hergestellt, die zu meistens 60, vorzugsweise minestens 80 Gew.-%, bezogen auf die Gesamtmonomeren, aus Styrolen und/oder (Meth-)Acrylsäureestern und aus bis zu 40, vorzugsweise bis zu 20 Gew.-%, bezogen auf die Gesamtmonomeren, aus den anderen genannten Monomeren bestehen.

Die Polymeren besitzen vorzugsweise K-Werte von 30 bis 120, insbesondere 40 bis 100 und Mindestfilmbildungstemperaturen (MFT) von -20 bis +60 °C, insbesondere bis +40 °c.

Die erfindungsgemäßen Dispersionen besitzen Festgehalte (FG) von 30 bis 70 Gew.% und werden hergestellt durch Polymerisation des Monomeren(-Gemisches) bei Temperaturen von über 65 °C, meist von höchstens 100 ° C, insbesondere höchestens 90 ° C in wäßriger Phase unter Einsatz von organischen Katalysatoren, insbesondere Hydroperoxiden und Azoverbindungen, die sowohl teilweise wasserlöslich als auch Öllöslich sind, gegebenenfalls in Kombination mit wasserlöslichen Reduktionsmitteln oder von Alkali- oder Ammoniumperoxoschwefelverbindungen.

2

Bei Durchführung des erfindungsgemäßen Verfahrens wird das Monomeren(gemisch) zu 0 bis 30 Gew.%, vorzugsweise 0 bis 15 Gew.% insbesondere 1 bis 15 Gew.%, bezogen auf das Gesamtgewicht des (der) Monomeren als Emulsion vorgelegt, der Rest des Monomeren(gemisches) wird dann im Laufe der Polymerisation als voremulsion mit der Maßgabe zudosiert, daß die Monomerkonzentration, bezogen auf die Dispersion, 20 Gew.%, insbesondere 15 Gew.% nicht überschreitet. Die Zusammensetzung der vorgelegten Emulsion kann von derjenigen der zudosierten Emulsion abweichen.

Eine bevorzugte Ausführungsform des erfindungsgemäßen Verfahrens ist das Samenlatexverfahren.

Der Monomervoremulsion, das gilt sowohl für die vorgelegte wie auch für die dosierte Emulsion, wird Polyvinylalkohol (PVAL) in Mengen von 4 bis 20) insbesondere 6 bis 15 Gew.% bezogen auf die Monomeren, zugesetzt. Als PVAL wird vorzugsweise solcher eingesetzt, der etwa 200 bis 2000 Monomereinheiten im Polymermolekül besitzt und Verseifungszahlen von etwa 20 bis 240 aufweist. Dies entspricht Hydrolysegraden von etwa 77 bis etwa 98,4 mol%.

Das erfindungsgemäße Verfahren kann durchgerührt werden unter Zusatz von organischen Katalysatoren, insbesondere Hydroperoxiden oder Azoverbindungen, die neben ihrer Monomerlöslichkeit auch teilweise wasserlöslich sind oder von anorganischen wasserlöslichen Katalysatoren. Besonders geeignete organische Verbindungen dieser Arten sind tert.-Butylhydroperoxid (TBHP), Cumolhydroperoxid, Isopropylbenzolmonohydroperoxid und Azoisobutyronitril (AIBN).

Unter den Peroxoschwefelverbindungen seien hier die Natrium-, Kalium- und Ammoniumsalze der Peroxoschwefelsäure, der Peroxodischwefelsäure und Verbindungen der Formel $R-O-CO-O-O-SO_3M$ genannt, wobei R einen aliphatischen oder cycloaliphatischen Rest, z. B. Alkyl oder Cycloalkyl mit 1 bzw. 5 bis ca. 18 C-Atomen, und M Natrium, Kalium oder Ammonium bedeuten.

Diese Verbindungen werden vorzugsweise in Mengen von 0,05 bis 3 Gew.%, bezogen auf Monomere, eingesetzt. Sie können ganz oder teilweise vorgelegt oder während der Polymerisation ganz oder teilweise dosiert werden.

Die organischen Katalysatoren können überdies in einer weiteren, bevorzugten Ausführungsform des erfindungsgemäßen Verfarens in Verbindung mit reduzierend wirkenden Substanzen als sogenanntes Redoxkatalysatorsystem eingesetzt werden. Hierbei werden die genannten organischen Verbindungen wiederum vorzugsweise in Mengen von 0,05 bis 3 Gew.%, bezogen auf Monomere, eingesetzt, sie können ebenfalls ganz oder teilweise vorgelegt oder aber ganz oder teilweise dosiert werden. Als geeignete Reduktionsmittel kommen beispielsweise wasserlösliche Phosphor- oder Stickstoffverbindungen, insbesondere aber Schwefelverbindungen in Frage, z. B. Sulfite oder Bisulfite der Alkalimetalle oder des Ammoniums, wie Natrium(bi)sulfit, Kalium(bi)sulfit, Ammonium(bi)sulfit, Derivate der Sulfoxylsäure, wie Zink- oder Alkaliformaldehydsulfoxylate, z. B. Natriumhydroxymethansulfinat. Diese Verbindungen werden gegebenenfalls im allgemeinen in Äquimolaren Mengen oder in bis zu etwa 20fachem Überschuß oder in bis zu 50prozentigem Unterschuß im Vergleich zu der anderen Komponente des Katalysatorsystems eingesetzt.

Wird als Initiator ein Redoxsystem eingesetzt, so wird das Reduktionsmittel vorzugsweise während der Polymerisation dosiert, insbesondere über die gesamte Polymerisationsdauer. Es ist selbstverständlich auch möglich, Schwermetallsalze in geringen Mengen als Aktivator mitzuverwenden.

Das erfindungsgemäße Verfahren wird im allgemeinen in beheiz- und kühlbaren Reaktoren, z. B. Autoklaven, die mit Bührorganen ausgestattet sind, durchgeführt. Die Reaktionsdauer kann auf diese Weise über die Wärmezu- oder insbesondere -abfur, d. h. über das Rühr- und (Heiz- bzw.)Kühlsystem, und über das Katalysatorsystem in einfacher Weise gesteuert werden. Hierbei genügen beim Einsatz von Redoxsystemen vielfach niedrigere Temperaturen, verglichen mit denen, die vorzugsweise beim Einsatz der Katalysatoren ohne Reduktionsmittel eingehalten werden. Jedoch haben sich Temperaturen in allen Fällen von etwa 67 bis 90° als besonders vorteilhaf erwiesen.

Im allgemeinen ist die Polymerisation beendet, wenn keine merkliche Wärmeentwicklung mehr feststellbar ist und wenn die Monomerkonzentration auf unter 1,5 Gew.%, bezogen auf Festgehalt, abgesunken ist. In einer besonders bevorzugten Ausführungsform wird die Polymerisation so durchgeführt, daß diese Restmonomerkonzentration bereits am Ende der Dosierung der Monomeren erreicht wird. Anschließend kann, wenn dies gewünscht ist, vorzugsweise in an sich bekannter Weise z. B. unter Zusatz von weiteren Initiatormengen von etwa 0,003 bis 1 Gew.%, bezogen auf Festgehalt, nachpolymerisiert werden, z. B. um Restmonomergehalte von unter 0,5 Gew.% zu erreichen. Im allgemeinen können auf diese Weise nach dem erfindungsgemäßen Verfahren sogar Polymerisate hergestellt werden, deren Restmonomergehalt bei oder unter 0,25 Gew.%, bezogen auf Polymerisat, liegt.

Mit den vorstehend beschriebenen Maßnahmen können die dem Gegenstand der Erfindung zugrundeliegenden Aufgaben gelöst werden, jedoch ist es durchaus auch möglich, weitere nicht erfindungswesentliche Maßnahmen durchzuführen, um z. B. besondere Effekte zu erzielen. So können der erfindungsgemäßen Dispersion schon während der Polymerisation und/oder meist und vorzugsweise nachträglich Hilfsstoffe beigemischt werden, die auch bei den bekannten wäßrigen Kunststoffdispersionen, z. B. aus anwendungstechnischen Gründen oftmals mitverwendet werden. Als Beispiele seien Verdickungsmittel, Pigmente, oberflächenaktive Stoffe, wie Emulgatoren, die Flammfestigkeit erhöhende Stoffe, Vernetzer, Füllstoffe, Verstärkungsmittel, Verfilmungshilfsmittel, Antioxidantien, Stabilibatoren, Fungicide, Entschäumer und Koaleszenzhilfsmittel, die jeweils in den bereits üblichen Mengen zugesetzt werden können, genannt.

Die erfindungzgemäß hergestellten Dispersionen können vielseitig verwendet werden. Sie zeigen Pigmentstabilität und im allgemeinen gute Verseifungsstabilität, die natürlich hauptsächlich von der qualitativen Zusammensetzung des Polymeren abhängt. Dies ermöglicht den Einsatz als Bindemittel in Dispersionsfarben und meist auch in hydraulisch abbindenden Baustoffen. Sie zeigen außerdem hohe Klebefestigkeit und können daher auch zur Herstellung von Klebstoffen verwendet werden. Z. B. eignen sich solche Dispersionen, die ein methylolacrylamidhaltiges Copolymerisat enthalten, in Kombination mit starken Protonsäuren, z. B. Phosphor- oder Schwefelsäure, oder mit Salzen dreiwertiger Metallionen von anorganischen Säuren, wie Chromnitrat oder Aluminiumnitrat, für den Einsatz als wasserfester Holzleim.

Die Dispersionen sind verdüsbar und daher auch zur Herstellung redispergierbarer Kunststoffpulver geeignet.

Da die Dispersionen zu Filmen mit stark glänzender Oberfläche auftrocknen, können sie insbesondere in Kombination mit Vernetzern für Beschichtungen, z. B. von Geweben, Leder, Papier, Karton, Holz oder Metall eingesetzt werden.

Die sich anschließenden Vergleichsversuche und Beispiele zeigen, daß bei der Durchführung des erfindungsgemäßen Verfahrens mit $H_2O_2$ als Katalysator allein oder zusammen mit einem Reduktionsmittel in keinem Falle eine Dispersion erzielt werden konnte, die hinsichtlich ihrer Eigenschaften befriedigte. Selbst die im allgemeinen erfolgreiche Maßnahme, durch mildere Reaktionsbedingungen (niedrigere Temperaturen) die Agglomeration oder Koagulation zu verhindern, führte nicht zum gewünschten Erfolg. Entgegen der Erfahrung aus der Herstellung von lediglich mit PVAL stabilisierten Dispersionen von Vinylacetathomo- und -copolymerisaten und von emulgatorstabilisierten Styrol- und Acrylatdispersionen können darüberhinaus auch mit Redoxsystemen aus Persulfat oder $H_2O_2$ jeweils mit Natriumhydroxymethansulfinat keine brauchbaren Dispersionen der erfindungsgemäßen (Co-)Polymerisate hergestellt werden. So kann dabei z. B. auch durch Zugabe größerer Mengen Katalysator oder durch mehrmaliges Nachpolymerisieren der Restmonomergehalt nicht auf ein vernünftiges Niveau, d. h. auf unter 0,5 Gew.% gesenkt werden.

Umso überraschender ist daher die Tatsache, daß beim vorliegenden Verfahren, Erhöhung der Reaktionstemperatur auf über 65° beim Einsatz der erfindungsgemäß verwendeten speziellen Katalysatorsysteme unter Dosierung der Hauptmenge der Monomeren in Form einer Voremulsion, so daß eine bestimmte maximale Monomerkonzentration nicht überschritten wird, stabile emulgatorfreie Dispersionen von (Co-)Polymerisaten, die zum überwiegenden Teil aus Styrol und/oder (Meth-)Acrylsäureestern bestehen, hergestellt werden können.

In den Beispielen und Vergleichsversuchen beziehen sich alle Prozentangaben auf das Gewicht.

## Beispiele und Vergleichsversuche

Allgemeine Vorschrift I für die in Tabelle 1 aufgeführten Beispiele und Vergleichsversuche:

In einem mit Rührer und Thermometer ausgestatteten und thermostabilisierten 2-1-Planschliffkolben wurde nach Einbringen der Vorlage und Erwärmen auf die gewünschte Reaktionstemperatur unter Dosierung der Voremulsion und gegebenenfalls der wäßrigen Lösung der Reduktionskomponente des Initiatorsystems die dann sehr gleichmäßig ablaufende Polymerisation praktisch ohne Induktionsperiode in Gang gesetzt. Die kontinuierliche(n) Dosierung(en) wurde(n) so eingestellt, daß die Konzentration der Monomeren während der Reaktion stets im Bereich von etwa 8 bis 15 %, bezogen auf das Reaktionsgemisch, lag und die Polymerisation bei Dosierungsende praktisch ebenfalls abgeschlossen war (Restmonomergehalt der Dispersion < 1,5 %, bezogen auf Polymeres). Anschließend wurde unter Zusatz von weiterem Initiator in üblicher Weise noch 1 Stunde nachpolymerisiert. Die so erhaltene Dispersion wurde dann untersucht.

Der eingesetzte PVAL besaß eine Viskosität von 4 mPa·s, gemessen nach Höppler bei 20° in 4 gewichtsprozentiger wäßriger Lösung, und eine Verseifungszahl von 140 mg KOH/g PVAL, entsprechend einem mittleren Hydrolysegrad von 87 bis 88 mol%. Das Monomerengemisch der Voremulsion setzte sich zusammen aus 59 % n-Butylacrylat, 39 % Styrol und je 1 % Acrylsäure und Acrylamid.

Allgemeine Vorschrift II für die Beispiele der Tabelle 2:

In einem mit Rührer und Thermometer ausgestatteten und thermostabilisierten 2-1-Planschliffkolben wurde nach Einbringen der Vorlage und Erwärmen auf die gewünschte Reaktionstemperatur unter Rühren ca. 5 % der Voremulsion zugesetzt und die Polymerisation mit der wäßrigen Reduktionsmittellösung (Brüggolith[R]) gestartet. Die Reaktion sprang sofort an. Nach 5 Minuten war das vorgegebene Monomere im wesentlichen auspolymerisiert. Nun wurden gemäß der allgemeinen Vorschrift I die Polymerisation fortgeführt und die nachfolgenden Untersuchungen vorgenommen. Der eingesetzte PVAL entsprach dem der allgemeinen Vorschrift I.

**Tabelle 1**

| Bei-spiele bzw. Vgl.-versuch | Vorlage | | | | Voremulsion | | | Red.-m.-Lsg.[6] | Temp. °C | Dosier-dauer (min.) | Endanalysen FG[7] %[11] | RM[8] %[9] |
|---|---|---|---|---|---|---|---|---|---|---|---|---|
| | g | %[1] PVAL[12] | %[1] Ini-tiator | g | % Mono-mere[10] | %[10] PVAL[12] | %[10] Ini-tiator | | | | | |
| A | 240 | 3,2 | 0,4[2] | 1190 | 61,5 | 4,4 | 0,3[2] | 2,5 | 50 | 115 | 25,9 | 14,8 |
| B | 240 | 3,2 | 0,4[2] | 1190 | 61,5 | 4,4 | 0,3[2] | 2,5 | 60 | 115 | 35,6 | 9.2 |
| C | 240 | 3,1 | 0,4[2] | 1175 | 62,5 | 4,3 | 0,3[2] | 2,5 | 70 | 115 | 28,7 | 12,6 |
| D | 240 | 3,1 | 1,0[3] | 1180 | 62,0 | 4,2 | 0,6[3] | 2,5 | 70 | 115 | 14,0 | 16,4 |
| E | 340 | 3,1 | 1,0[3] | 1180 | 62,0 | 4,2 | 0,6[3] | — | 80 | 115 | 38,7 | 9,2 |
| F | 340 | 2,2 | 1,1[3] | 1185 | 62,0 | 4,2 | 1,0[3] | — | 80 | 120 | 36,1 | 6,0 |
| 1 | 340 | 2,3 | 0,3[2] | 1190 | 61,5 | 4,4 | 0,3[2] | — | 67 | 115 | 50,2 | 0,7 |
| 2 | 290 | 2,7 | 0,2[2] | 1240 | 59,0 | 4,3 | 0,2[2] | — | 75 | 120 | 51,2 | 0,12 |
| G | 215 | — | 0,7[4] | 1240 | 59,0 | 4,9 | 0,5[4] | 5 | 60 | 45 | 23,3 | 12,4 |
| 3 | 215 | — | 0,7[4] | 1240 | 59,0 | 4,9 | 0,5[4] | 5 | 67 | 45 | 49,8 | 0,1 |
| 4 | 210 | — | 0,7[4] | 1240 | 59,0 | 4,7 | 0,5[4] | 5 | 70 | 45 | 50,1 | 0,21 |
| 5 | 215 | — | 0,7[4] | 1220 | 60,0 | 4,6 | 0,5[4] | 5 | 80 | 45 | 50,0 | 0,5 |
| H | 340 | 2,1 | — | 1180 | 62,0 | 4,3 | 0,3[5] | — | 65 | 115 | 36,7 | 6,0 |
| 6 | 340 | 2,1 | — | 1180 | 62,0 | 4,3 | 0,3[5] | — | 80 | 115 | 50,0 | 0,05 |
| I | 240 | 3,1 | — | 1180 | 62,0 | 4,3 | 0,3[5] | 2,5 | 65 | 120 | 36,9 | 5,7 |
| 7 | 240 | 3,0 | — | 1180 | 62,0 | 4,3 | 0,3[5] | 2,5 | 70 | 120 | 50,6 | 0,1 |

**Tabelle 1 (forts.)**

| Bei-spiel bzw. Vgl.-versuch | Viskositätsmessungen nach Brookfield | | | | | mit Epprecht-Rheo-meter STV | | MFT[14] | K-Wert | Gesamtbeur-teilung |
|---|---|---|---|---|---|---|---|---|---|---|
| | Rüh-rer | 1 min[-1] | 10 min[-1] | 20 min[-1] | Struk-tur-visk.[13] | Becher | Stufe III (mPa·s) | | | |
| A | — | — | — | — | — | — | — | — | — | unbrauchbar |
| B | — | — | — | — | — | — | — | — | — | unbrauchbar |
| C | — | — | — | — | — | — | — | — | — | unbrauchbar |
| D | — | — | — | — | — | — | — | — | — | unbrauchbar |
| E | — | — | — | — | — | — | — | — | — | unbrauchbar |
| F | — | — | — | — | — | — | — | — | — | unbrauchbar |
| 1 | 6 | 134000 | 25200 | 3160 | 4,32 | D | 3103 | <0 | 98,1 | gut |
| 2 | 7 | 680000 | 189200 | 118400 | 2,59 | — | — | 2 | 89,1[15] | sehr gut |
| G | — | — | — | — | — | — | — | — | — | unbrauchbar |
| 3 | 5 | 96400 | 19400 | 12040 | 3,97 | C | 1778 | 0 | 44,3 | sehr gut |
| 4 | 5 | 48800 | 10400 | 6680 | 3,69 | C | 2059 | 0 | 45,0 | sehr gut |
| 5 | 4 | 33400 | 7020 | 4520 | 3,76 | C | 1038 | <0 | 63,1[15] | sehr gut |
| H | — | — | — | — | — | — | — | — | — | unbrauchbar |
| 6 | 2 | 4080 | 1616 | 1304 | 1,52 | C | 655 | 1 | 57,3[15] | sehr gut |
| I | — | — | — | — | — | — | — | — | — | unbrauchbar |
| 7 | 2 | 3040 | 1200 | 966 | 1,53 | C | 507 | 0 | 56,8[15] | sehr gut |

**Tabelle 2**

| Bei-spiel | g | PVAL[12] %[1] | Vorlage Initia-tor[4] %[1] | g | Monome-re | Voremulsion %[10] | PVAL[12] %[10] | Initia-tor[4] %[10] |
|---|---|---|---|---|---|---|---|---|
| 8 | 240 | — | 0,4 | 985 | EHA | 33 | 5,9 | 0,6 |
| | | | | | BA | 36 | | |
| | | | | | HPA | 4 | | |
| | | | | | AMA | 0,1 | | |
| 9 | 300 | — | 0,3 | 955 | EHA | 34 | 10,5 | 0,5 |
| | | | | | BA | 37 | | |
| | | | | | HPA | 4 | | |
| | | | | | AMA | 0,1 | | |
| | | | | | AS | 0,9 | | |
| | | | | | AA | 0,9 | | |
| 10 | 230 | — | 0,4 | 985 | EHA | 33 | 5,9 | 0,6 |
| | | | | | BA | 36 | | |
| | | | | | HPA | 4 | | |
| | | | | | AMA | 0,1 | | |
| | | | | | AS | 0,8 | | |
| | | | | | AA | 0,8 | | |
| 11 | 230 | — | 0,4 | 990 | EHA | 32 | 5,7 | 0,6 |
| | | | | | BA | 35,5 | | |
| | | | | | HPA | 3,6 | | |
| | | | | | AMA | 0,1 | | |
| | | | | | AS | 0,7 | | |
| | | | | | AA | 0,7 | | |
| | | | | | AD | 2,8 | | |
| 12 | 215 | — | 0,7 | 975 | S | 37 | 5,8 | 0,7 |
| | | | | | BA | 35 | | |
| | | | | | NMA | 2,1 | | |
| | | | | | AS | 0,7 | | |
| 13 | 145 | 9,9 | 0,65 | 870 | MA | 80 | 6,6 | 0,8 |
| | | | | | NMA | 2,5 | | |
| | | | | | HAS | 0,8 | | |
| 14 | 215 | 7,1 | 0,6 | 920 | MA | 63 | 6,3 | 0,7 |
| | | | | | DBM | 16 | | |
| | | | | | AS | 0,8 | | |
| | | | | | AA | 0,8 | | |

**Tabelle 2** (forts)

| Bei-spiel | wss. Red.-mit-tel Lsg. 2,5 %ig g[17] | Temp. °C | Dosier-dauer (min.) | FG[7] %[11] | Endanalysen RM[8] %[9] | MFT[14] | K-Wert |
|---|---|---|---|---|---|---|---|
| 8 | 120 | 80 | 125 | 50,2 | 0,35 | < 0 | — |
| 9 | 140 | 75 | 117 | 46,7 | 0,17 | < 0 | 60,7 |
| 10 | 115 | 75 | 122 | 52,2 | 0,07 | < + 1 | — |
| 11 | 150 | 75 | 120 | 50,1 | 0,6 | < 0 | — |
| 12 | 110 | 80 | 135 | 48,3 | 0,45 | + 16,5 | — |
| 13 | 96 | 80 | 90 | 50,2 | 0,13 | < 0 | 64,4 |
| 14 | 80 | 80 | 120 | 50,0 | 0,008 | + 1,5 | 72,7 |

**Tabelle 2** (forts)

| Bei-spiel | | Viskositätsmessungen nach Brookfield | | | | | mit Epprecht Rheometer | |
|---|---|---|---|---|---|---|---|---|
| | Rührer | $1\,\text{min}^{-1}$ | $10\,\text{min}^{-1}$ | $20\,\text{min}^{-1}$ | Struk-tur-visk.[13] | | Becher | Stufe III (mPa·s) |
| 8 | 1 | 460 | 408 | 405 | 0,1 | | B | 279 |
| 9 | 2 | 200 | 400 | — | — | | B | 376 |
| 10 | 1 | 670 | 668 | — | — | | — | — |
| 11 | 2 | 4840 | 1832 | 1462 | 1,64 | | C | 767 |
| 12 | 6 | 13100 | 7300 | 2800 | 2,51 | | D | 11790 |
| 13 | 4 | 19000 | 4660 | 3200 | 3,08 | | C | 1031 |
| 14 | 4 | 10600 | 3060 | 2210 | 2,46 | | C | 873 |

**Fußnoten**

[1] bezogen auf Gesamtgewicht der Vorlage

[2] Kaliumpersulfat

[3] Wasserstoffperoxid

[4] tert.-Butylhydroperoxid

[5] Azoisobutyronitril

[6] wäßrige Reduktionsmittellösung: - keine Dosierung, sonst jeweils 100 ml mit g Gehalt an Natriumformaldehydsulfoxylat (Brüggolith [R])

[7] Festgehalt

[8] Restmonomergehalt

[9] bezogen auf Polymer

[10] bezogen auf Gesamtgewicht der Voremulsion

[11] bezogen auf Dispersion

[12] Polyviol[R] G 04/140 (Fa. Wacker-Chemie GmbH, München, DE)

[13] Strukturviskosität $= \dfrac{\text{Visk.-Wert}(1\,\text{min}^{-1}) - \text{Visk.-Wert}\,(10\,\text{min}^{-1})}{\text{Visk.-Wert}\,(10\,\text{min}^{-1})}$

[14] Mindestfilmbildungstemperatur °C

[15] leicht trübe Lösung

[16] BA = n-Butylacrylat, EHA = Ethylhexylacrylat, HPA = Hydroxypropylacrylat, AMA = Allylmethacrylat, S = Styrol, NMA = N-Methylolacrylamid, MA = Methylacrylat, DBM = Di-n-butylmaleinat, AS = Acrylsäure, AA = Acrylamid, AD = Allyldiacetylacetat

[17] Natriumformaldehydsulfoxylat

**Patentansprüche**

1. Verfahren zur Herstellung von in Gegenwart von 4 - 20 Gew.-% Polyvinylalkohol, bezogen auf Monomere, hergestellten wäßrigen Dispersionen auf Basis von Polymeren, die zumindestens 60 Gew.-% aus (Meth-)Acrylsäureester- und/oder Styroleinheiten bestehen, mit einem Festgehalt von 30 bis 70 Gew.-%, dadurch gekennzeichnet, daß die polymerisation bei Temperaturen von über 65°C in Gegenwart von organischen Katalysatoren, die neben ihrer Monomerlöslichkeit auch teilweise wasserlöslich sind, gegebenenfalls in Kombination mit wasserlöslichen Reduktionsmitteln, oder von Peroxoschwefelverbindungen in der Weise durchgeführt wird, daß bezogen auf das Gesamtgewicht die Monomerkonzentration während der gesamten Reaktionsdauer unter 20 Gew.-% gehalten wird und dementsprechend die Hauptmenge der Monomeren in Form einer Voremulsion während der Reaktion dosiert wird.

2. Verwendung der gemäß Anspruch 1 hergestellten Dispersionen zur Herstellung redispergierbarer Pulver.

3. Verwendung der gemäß Anspruch 1 hergestellten, methylolacrylamidhaltiges Copolymerisat enthaltenden Dispersionen in Kombination mit starken Protonsäuren oder mit Salzen dreiwertiger Metallionen von anorganischen Säuren als wasserfester Holzleim.

**0 062 106**

**Claims**

1. Process for the manufacture of aqueous dispersions that are prepared in the presence of from 4 to 20% by weight of a polyvinyl alcohol, based on the monomers, and that are based on polymers comprising at least 60% by weight of (meth)acrylic acid ester units and/or styrene units, and have a solids content of from 30 to 70% by weight, characterised in that the polymerisation is carried out at temperatures of over 65°C in the presence of organic catalysts that, in addition to being soluble in the monomer(s), are also partially water-soluble, optionally in combination with water-soluble reducing agents, or in the presence of peroxosulphur compounds, in such a manner that, during the entire duration of the reaction, the monomer concentration is maintained at less than 20% by weight based on the total weight, and accordingly the main quantity of the monomers is metered in in the form of a pre-emulsion, during the reaction.

2. Use of the dispersions manufactured according to claim 1 for the preparation of redispersible powders.

3. Use of the dispersions manufactured according to claim 1 and containing methylol acrylamide-containing copolymers, in combination with strong protonic acids or with salts of trivalent metal ions of inorganic acids as water-resistant wood glue.

**Revendications**

1. Procéde pour préparer des dispersions aqueuses (obtenues en présence de 4 à 20 % en poids de poly(alcool vinylique), par rapport aux monomères, à base de polymères qui consistent pour au moins 60 % en poids en des motifs esters d'acides (meth)acryliques et/ou des motifs styrènes, ayant une teneur en des matières solides de 30 à 70% en poids, procédé caractérisé en ce qu'on conduit la polymérisation à des températures supérieures à 65°C en présence de catalyseurs sont aussi partiellement solubles dans l'eau, éventuellement en combinaison avec des réducteurs hydrosolubles, ou des composés de type peroxosoufre de manière que, par rapport au poids total, la concentration des monomères soit maintenue pendant la totalité de la durée de réaction au-dessous de 20% en poids et que, donc, on introduise pendant la réaction, de façon dosée et sous forme d'une émulsion préparée au préalable la majeure partie des monomères.

2. Utilisation des dispersions, produites selon la revendication 1, pour préparer de la poudre redispersable.

3. Utilisation des dispersions, produites selon la revendication 1, contenant du copolymère contenant du méthylolacrylamide, en combinaison avec des acides protoniques forts ou avec des sels d'ions métalliques trivalents d'acides minéraux, à titre de colles, pouvant résister à l'eau, pour le bois.